# EUROPEAN PATENT SPECIFICATION

(11) **EP 1 714 831 B1**
(45) Date of publication and mention of the grant of the patent: **13.08.2008**
(21) Application number: 06008229.4
(22) Date of filing: 20.04.2006
(51) Int. Cl.: B60Q 1/12, B60Q 11/00

(54) **Vehicle headlight device**
Fahrzeugscheinwerfereinrichtung
Dispositif projecteur pour véhicule

(30) Priority: 20.04.2005 JP 2005122627
(43) Date of publication of application: 25.10.2006
(73) Proprietor: ICHIKOH INDUSTRIES, LTD., Tokyo 144-0022 (JP)
(72) Inventor: Ichikawa, Shigeki, Isehara-shi Kanagawa-ken 259-1192 (JP)
(74) Representative: Grünecker, Kinkeldey, Stockmair & Schwanhäusser Anwaltssozietät

(56) References cited:
- DE-A1- 19 911 901
- US-A1- 2002 163 815
- US-A1- 2004 085 780

## Description

### BACKGROUND OF THE INVENTION

### 1. Field of the Invention

The present invention relates to a vehicle headlight device (a vehicle headlight system) that changes an irradiating direction of light from a headlight unit according to a state of a vehicle.

### 2. Description of the Related Art

A conventional vehicle headlight device that changes an irradiating direction of light from a headlight unit according to, for example, a running state of a vehicle, such as an adaptive front lighting system (AFS), is described in, for example, Japanese Patent Application Laid-Open No. 2004-106770. The conventional vehicle headlight device detects a running state of a vehicle with a sensor and outputs a detection signal of the sensor to a main central processing unit (CPU) (a master electric control unit (ECU)). The main CPU calculates a rotation angle of a swivel lamp (a headlight unit) based on the detection signal and outputs data of the rotation angle to a sub-CPU (a slave ECU). The sub CPU drives an actuator (a driving unit) based on the rotation angle data. The actuator rotates the swivel lamp. This makes it possible to change an irradiating direction of light from the swivel lamp.

In the conventional vehicle headlight device, a device that sets an optical axis of the swivel lamp in a reference angle position (i.e., an initial-position setting device of the headlight unit) is provided. Consequently, the conventional vehicle headlight device can grasp an initial position of the swivel lamp. This makes it possible to accurately change an irradiating direction of light from the swivel lamp according to a running state of a vehicle.

However, in the conventional vehicle headlight device, when an abnormality occurs in the sub-CPU and the sub-CPU is reset, the main CPU cannot grasp the reset of the sub-CPU. When the swivel lamp is rotated in this state, glare may be cast at an oncoming car.

A vehicle headlight device according to the preamble of claim 1 is known from US 2004/0085780 A1. This conventional device comprises a central ECU on the vehicle, and an actuator unit associated with each lamp. Communication between the interface circuits on the ECU and on the actuator, respectively, is a two-way communication. If the central ECU does not receive a required response signal from the actuator, or if it receives an operating signal without having asked for it, the central ECU detects an abnormality and activates a power-on resetting unit on the actuator.

In some instances, the conventional system of US 2004/0085780 A1 may have a rather slow response. Accordingly, it is the object of the present invention to solve the problems of the prior art.

### SUMMARY OF THE INVENTION

According to the present invention, this object is solved by a vehicle headlight device with the features of claim 1. Advantageous embodiments of the invention are referred to in the dependent claims.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram of a vehicle headlight device according to an embodiment of the present invention; and
Fig. 2 is a front view of a driving unit and a projector unit according to the present embodiment.

### DETAILED DESCRIPTION OF THE PREFERRED EMBODIMENTS

Exemplary embodiments of the present invention are explained in detail below with reference to the accompanying drawings. The present invention is not limited by the embodiments.

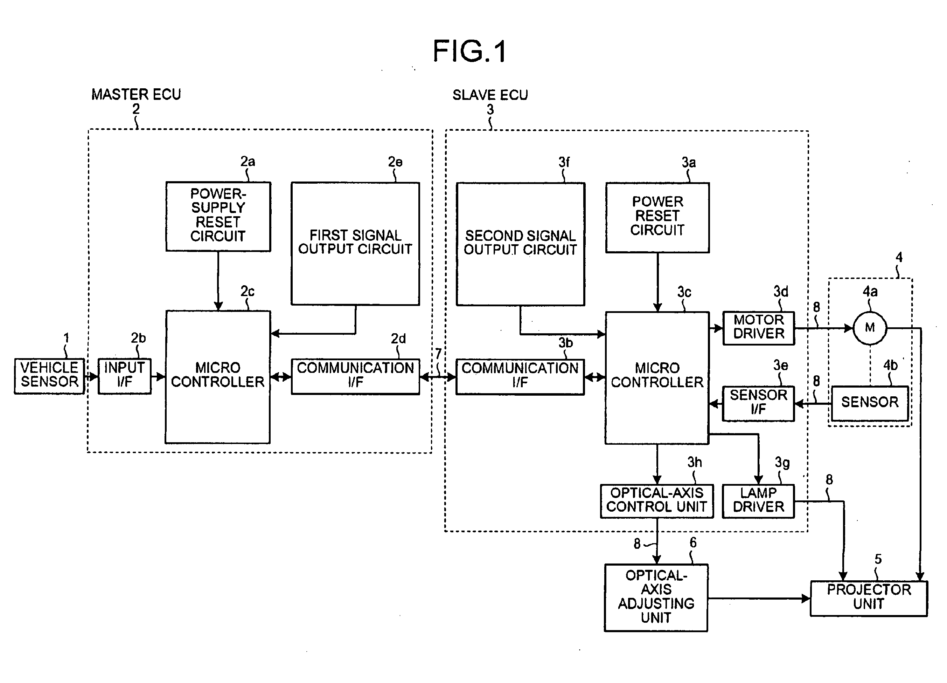

Fig. 1 is a block diagram of a vehicle headlight device according to an embodiment of the present invention.

The vehicle headlight device according to the present embodiment includes a projector unit (a headlight unit) 5, a driving unit (a swivel actuator unit) 4, a vehicle sensor 1, a master ECU 2, and a slave ECU 3.

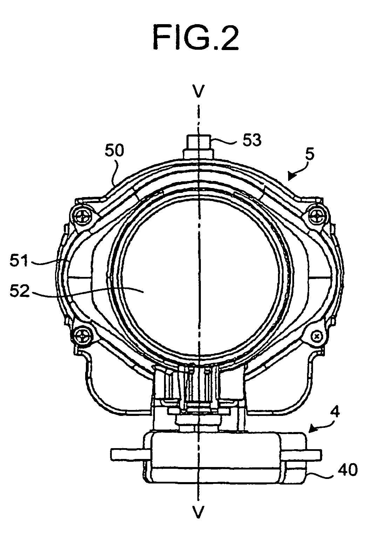

The projector unit 5 is arranged on each of the left side and the right side in a front portion of a vehicle (not shown) to be rotatable around a substantially vertical axis V-V. The projector unit 5 is a lamp unit of a projector type. As shown in Fig. 2, the projector unit 5 includes a light source (not shown), a reflector 50, a frame 51, a projection lens 52, and a rotation shaft 53 (the upper side of the rotation shaft 53 is shown and the lower side of the rotation shaft 53 is not shown in the figure). The rotation shaft 53 is supported by a bearing (not shown) to be rotatable around the substantially vertical axis V-V. In the projector unit 5, when the light source is turned on, light from the light source is reflected on the reflector 50 and the reflected light is projected through the projection lens 52 to illuminate a road surface or the like. The projector unit 5 is made of a headlight unit like a headlamp or a fog lamp. The projector unit 5 may be a lamp unit of a type other than the projector type.

The driving unit 4 rotates the projector unit around the substantially vertical axis V-V to change an irradiating direction of light from the projector unit. Like the projector unit 5, the driving unit 4 is arranged on each of the left side and the right side in the front portion of the vehicle. As shown in Figs. 1 and 2, the driving unit 4 includes a casing 40, a stepping motor 4a and a position detecting sensor 4b arranged in the casing 40, and an initial position setting unit (not shown) for setting an initial position of the projector unit 5. The stepping motor 4a is coupled to the rotation shaft 53 via a torque transmission mechanism (not shown). The stepping motor 4a is driven based on drive control by the slave ECU 3 and rotates (swivels) the projector unit 5 around the substantially vertical axis V-V to change an irradiating direction of light from the projector unit 5. The position detecting sensor 4b detects a rotating position of the projector unit 5 and outputs a detection signal for the rotating position to the slave ECU 3.

The vehicle sensor 1 detects a running state of the vehicle and outputs a vehicle signal. In this example, the vehicle sensor 1 includes a steering angle sensor, a headlamp switch, a vehicle speed sensor, and a reverse sensor. The steering angle sensor detects a steering angle (synonymous with a rudder angle) of a steering handle (not shown; synonymous with a steering wheel, a handle, and the like) and a steering direction and outputs a steering angle signal and a steering direction signal to the master ECU 2. For example, when the vehicles runs on a curved road (a road curving to the left or a road curving to the right) or when the vehicle turns to the left or the right at the crossing, the steering angle sensor detects a steering angle (a rotation angle) and a steering direction (a rotating direction) of a steering handle operated by a driver and outputs a steering angle signal and a steering direction signal to the master ECU 2. For example, when the steering angle sensor and the master ECU 2 mounted on the vehicle are networked, the steering angle signal and the steering direction signal are obtained as specific numerical value data. For example, the specific numerical value data is obtained as numerical value data of +10° when the steering handle is turned 10° to the right and is obtained as numerical value data of -10° when the steering handle is turned 10° to the left. Alternatively, the specific numerical value data is obtained as numerical value data of "990" with respect to a neutral numerical value of "1000" when the steering handle is turned 10° to the right and is obtained as numerical value data of "1010" with respect to the neutral numerical value of "1000" when the steering handle is turned 10° to the left. The steering angle signal and the steering direction signal may be obtained as, for example, electric signals output to the master ECU 2 by the steering angle sensor (e.g., an optical sensor) mounted on the vehicle. The head lamp switch is turned on and off by the driver to turn on and off the headlamp or the like (not shown). When the headlamp switch is on, the headlamp switch outputs an ON signal (e.g., a high level signal) to the master ECU 2. When the headlamp switch is off, the headlamp switch outputs an OFF signal (e.g., a low level signal) to the master ECU 2. The vehicle speed sensor detects vehicle speed and outputs a vehicle speed signal to the master ECU 2. The reverse sensor detects a reverse position among shift positions of a shift lever (not shown) and outputs a reverse signal to the master ECU 2.

The master ECU 2 calculates a rotation angle (a swivel angle) of the projector unit 5 based on a vehicle signal from the vehicle sensor 1 and outputs rotation angle data to the slave ECU 3. The master ECU 2 is arranged in a driver's seat cab or near the driver's seat cab. As shown in Fig. 1, the master ECU 2 includes a power-supply reset circuit 2a, an input interface (I/F) 2b, a microcontroller 2c, a communication interface (I/F) 2d, and a first signal output circuit 2e.

The power-supply reset circuit 2a resets a power supply for the microcontroller 2c when the power-supply reset circuit 2a detects abnormality of the microcontroller 2c in the master ECU 2. The input I/F 2b is connected to the vehicle sensor 1. The input I/F 2b is input with a vehicle signal from the vehicle sensor 1 and outputs (transfers) the vehicle signal to the microcontroller 2c. The microcontroller 2c calculates a rotation angle of the projector unit 5 based on the vehicle signal input from the input I/F 2b and outputs (transfers) rotation angle data to the communication I/F 2d. The communication I/F 2d outputs (transmits) the rotation angle data input from the microcontroller 2c to the slave ECU 3.

The slave ECU 3 drives the driving unit 4 based on the rotation angle data from the master ECU 2 to change an irradiating direction of light from the projector unit 5. The slave ECU 3 is arranged in the driving unit 4 or near the driving unit 4 or in the projector unit 5 or near the projector unit 5. As shown in Fig. 1, the slave ECU 3 includes a power-supply reset circuit 3a, a communication interface (I/F) 3b, a microcontroller 3c, a motor driver 3d, a sensor interface (I/F) 3e, a second signal output circuit 3f, a lamp driver 3g, and an optical-axis control unit 3h.

The power-supply reset circuit 3a resets a power supply for the microcontroller 3c when the power-supply reset circuit 3a detects abnormality of the microcontroller 3c in the slave ECU 3. The communication I/F 3b is connected to the communication I/F 2d of the master ECU 2. The communication I/F 3b is input with (receives) rotation angle data from the master ECU 2 and outputs the rotation angle data to the microcontroller 3c. The microcontroller 3c outputs a motor drive control signal to the motor driver 3d based on the rotation angle data input from the communication I/F 3b. The microcontroller 3c grasps a position of the projector unit 5 based on a position signal input from the sensor I/F 3e. The motor driver 3d controls driving of the stepping motor 4a based on the motor drive control signal input from the microcontroller 3c. The sensor I/F 3e is connected to the position detecting sensor 4b. The sensor I/F 3e is input with a position detection signal from the position detecting sensor 4b and outputs (transfers) the position detection signal to the microcontroller 3c.

A circuit that outputs an abnormality occurrence signal to the master ECU 2 when abnormality occurs, that is, the second signal output circuit 3f is provided in the slave ECU 3. On the other hand, a circuit that outputs a projector-unit-initial-position-setting-operation instruction signal to the slave ECU 3 based on the abnormality occurrence signal from the slave ECU 3, that is, the first signal output circuit 2e, is provided in the master ECU 2. The lamp driver 3g that subjects a light amount of a power supply for the projector unit 5 to dimming control is provided in the slave ECU 3. An optical-axis adjusting unit 6 that adjusts an optical axis of the projector unit 5 is provided in the projector unit 5. On the other hand, the optical-axis control unit 3h that adjusts the optical axis of the projector unit 5 via the optical-axis adjusting unit 6 is provided in the slave ECU 3.

The master ECU 2 and the slave ECU 3 are connected by one signal line 7. The slave ECU 3 and the driving unit 4 or the projector unit 5 are connected by a plurality of signal lines 8. In other words, the motor driver 3d of the slave ECU 3 and the stepping motor 4a of the driving unit 4 are connected by the signal line 8. The sensor I/F 3e of the slave ECU 3 and the position detecting sensor 4b of the driving unit 4 are connected by the signal line 8. The lamp driver 3g of the slave ECU 3 and the projector unit 5 are connected by the signal line 8. Moreover, the optical-axis control unit 3h of the slave ECU 3 and the optical-axis adjusting unit 6 are connected by the signal line 8.

The vehicle headlight device according to the present embodiment has the constitution described above. Actions of the vehicle headlight device according to the present embodiment are explained below.

First, a power supply to the master ECU 2 and the slave ECU 3 is turned on to start the vehicle headlight device according to the present embodiment. Then, the master ECU 2 and the slave ECU 3 perform an operation for setting an initial position of the projector unit 5 (an initialize operation) first. The master ECU 2 outputs a projector-unit-initial-position-setting-operation instruction signal to the slave ECU 3 via the communication I/Fs 2d and 3b. The slave ECU 3 input with the projector-unit-initial-position-setting-operation instruction signal performs an operation for setting an initial position of the projector unit 5.

In the initialize operation, first, the slave ECU 3 rotates the stepping motor 4a in one direction to a position where the initial position setting unit in the casing 40 of the driving unit 4 mechanically interferes with the stepping motor 4a to intentionally regulate the initial position setting unit. When the initial position setting unit mechanically interferes with the stepping motor 4a, the slave ECU 3 stops the rotation in one direction of the stepping motor 4a and rotates to return the stepping motor 4a in the opposite direction by a predetermined pulse. Consequently, the projector unit 5 is set in the initial position. According to the initialize operation, the slave ECU 3 can grasp the initial position of the projector unit 5. Thus, it is possible to accurately change an irradiating direction of light from the projector unit 5 according to a running state of the vehicle. In other words, when the power supply to the slave ECU 3 is turned on, data of a rotating position of the projector unit 5 stored in a RAM or the like in the slave ECU 3 is reset. Therefore, the slave ECU 3 cannot grasp the initial position of the projector unit 5. When the projector unit 5 is controlled to rotate in this state in which the initial position of the projector unit 5 is not grasped, a deficiency occurs in that it is impossible to accurately change an irradiating direction of light from the projector unit 5 according to a running state of the vehicle. The initialize operation prevents this deficiency.

When the initialize operation is completed, the master ECU 2 and the slave ECU 3 perform a normal operation. The normal operation is explained below.

Vehicle signals are input from the vehicle sensor 1 to the microcontroller 2c via the input I/F 2b in the master ECU 2. For example, a steering angle signal and a steering direction signal are input from the steering angle sensor. An ON signal and an OFF signal are input from the headlamp switch. A vehicle speed signal is input from the vehicle speed sensor. A reverse signal is input from the reverse sensor. The microcontroller 2c calculates an angle for rotating the projector unit 5 based on the vehicle signal input and outputs the rotation angle calculated to the slave ECU 3 via the communication I/F 2d as rotation angle data.

The rotation angle data is input from the master ECU 2 to the microcontroller 3c via the communication I/F 3b in the slave ECU 3. The microcontroller 3c outputs a motor drive control signal to the motor driver 3d based on the rotation angle data input. The motor driver 3d drives the stepping motor 4a of the driving unit 4 based on the motor drive control signal input. The projector unit 5 rotates to the calculated angle according to the driving of the stepping motor 4a. When the projector unit 5 rotates to the calculated angle, the position detecting sensor 4b detects a rotating position of the projector unit 5 and outputs a position detection signal for the rotating position to the slave ECU 3. The slave ECU 3 stops the driving of the stepping motor 4a. This makes it possible to cause an irradiating direction of light from the projector unit 5 to follow a state of the vehicle.

When abnormality occurs on the slave ECU 3 side in the normal operation, the master ECU 2 and the slave ECU 3 perform a reset operation. The reset operation is explained below.

When power supply abnormality (a low voltage, etc.) or microcomputer runaway (a watchdog function) occurs on the slave ECU 3 side, the power-supply reset circuit 3a operates to reset the microcontroller 3c. When the microcontroller 3c is reset, the data of a rotating position of the projector unit 5 stored in the RAM or the like in the slave ECU 3 is reset. Therefore, the slave ECU 3 cannot grasp a present position of the projector unit 5, that is, a position at the time when the abnormality occurs on the slave ECU 3 side.

Thus, the slave ECU 3 outputs an abnormality occurrence signal to the master ECU 2. Consequently, the master ECU 2 can grasp the occurrence of the abnormality on the slave ECU 3 side that cannot be grasped by the slave ECU 3. The master ECU 2 outputs a projector-unit-initial-position-setting-operation instruction signal to the slave ECU 3 based on the abnormality occurrence signal input from the slave ECU 3. Consequently, the initialize operation is performed again. When the initialize operation is performed again, the master ECU 2 and the slave ECU 3 return to the normal operation. When the power supply to the master ECU 2 and the slave ECU 3 is turned off, the operation of the vehicle headlight device according to the present embodiment stops.

The vehicle headlight device according to the present embodiment has the constitution and the actions described above. Effects of the vehicle headlight device according to the present embodiment are explained below.

In the vehicle headlight device according to the present embodiment, when abnormality occurs in the slave ECU 3 and the slave ECU 3 is reset, the slave ECU 3 outputs an abnormality occurrence signal to the master ECU 2. The master ECU 2 outputs a projector-unit-initial-position-setting-operation instruction signal to the slave ECU 3. Therefore, in the vehicle headlight device according to the present embodiment, when abnormality occurs in the slave ECU 3 and the slave ECU 3 is reset, the master ECU 2 can grasp reset of the slave ECU 3. Moreover, the master ECU 2 can set an initial position of the projector unit 5. Consequently, in the vehicle headlight device according to the present embodiment, when the slave ECU 3 is reset, the master ECU 2 can grasp a position of the projector unit 5. Thus, it is possible to always accurately and surely control an irradiating direction of light from the projector unit 5. It is possible to contribute to traffic safety without casting glare at an oncoming car or the like.

In particular, in the vehicle headlight device according to the present embodiment, a control device is divided into the master ECU 2 and the slave ECU 3. Thus, it is possible to connect the master ECU 2 on the driver side and the slave ECU 3 on the driving unit 4 side in the front portion of the vehicle with one signal line 7. Further, it is possible to connect the slave ECU 3 and the driving unit 4 or the projector unit 5, which are a short distance apart from each other, with the signal lines 8. Therefore, in the vehicle headlight device according to the present embodiment, compared with a headlight device in which a control device and a driving unit, which are a long distance apart from each other, are connected by a large number of signal lines, it is easy to wire the signal lines and take noise prevention measures.

Moreover, in the vehicle headlight device according to the present embodiment, it is possible to cause the slave ECU 3 to perform dimming control for gradually increasing or gradually decreasing a light amount of the light source of the projector unit 5 via the lamp driver 3g. It is also possible to cause the slave ECU 3 to perform optical axis control for adjusting the optical axis of the projector unit 5 in an up-to-down direction (a vertical direction) via the optical-axis control unit 3h and the optical-axis adjusting unit (a leveling device) 6. Consequently, it is possible to reduce the number of long signal lines 7 wired between the master ECU 2 and the slave ECU 3 to one. On the other hand, it is possible to reduce the length of the large number of signal lines 8 wired between the slave ECU 3 and the projector unit 5.

According to the present embodiment, one slave ECU 3, one driving unit 4, and one projector unit 5 are shown in the figure. However, in the present invention, the vehicle headlight device includes a slave ECU, a driving unit, and a projector unit on the left side and a slave ECU, a driving unit, and a projector unit on the right side. A master ECU and the slave ECUs on the left side and the right side are connected in parallel. Alternatively, the master ECU and one slave ECU are connected and the master ECU is connected to the other slave ECU through one slave ECU.

## Claims

1. A vehicle headlight device comprising:
a headlight unit (5) arranged on each of left and right of a front of a vehicle, the headlight unit (5) being rotatable around a substantially vertical axis (V);
a driving unit (4) that drives the headlight unit (5) to be rotated around the substantially vertical axis (V) to change a direction of irradiating light from the headlight unit (5);
a vehicle sensor (1) that detects a state of the vehicle and outputs a detection signal;
a master electric control unit (2) that calculates a rotation angle of the headlight unit (5) based on the detection signal from the vehicle sensor (1) and outputs rotation angle data; and
a slave electric control unit (3) that controls the driving unit (4) based on the rotation angle data from the master electric control unit (2) to drive the headlight unit (5), wherein
the slave electric control unit (3) includes
a power-supply reset circuit (3a); and
a second signal output circuit (3f) that outputs an abnormality occurrence signal to the master electric control unit (2) upon occurrence of the abnormality, and
the master electric control unit (2) includes
a first signal output circuit (2e) that outputs an instruction signal for an initial-position setting operation of the headlight unit (5) to the slave electric control unit (3) based on the abnormality occurrence signal from the slave electric control unit (3),
**characterized in that**
the power-supply reset circuit (3a) of the slave electronic control unit (3) is configured to detect an abnormality in a microcontroller (3c) of the slave electronic control unit (3) and to reset a power supply upon occurrence of an abnormality in the slave electric control unit (3).

2. The vehicle headlight device according to claim 1, wherein
the master electric control unit (2) is arranged on a driver side,
the slave electric control unit (3) is arranged on a side of the driving unit (4) and the headlight unit (5),
the master electric control unit (2) and the slave electric control unit (3) are connected by a single signal line (7), and
the slave electric control unit (3) and the driving unit (4) or the headlight unit (5) are connected by a plurality of signal lines (8).

3. The vehicle headlight device according to claim 1 or 2, wherein
the slave electric control unit (3) includes
a lamp driver (3g) that adjusts an amount of light from a light source of the headlight unit (5), and
the lamp driver (3g) and the headlight unit (5) are connected by a signal line (8).

4. The vehicle headlight device according to any one of claims 1 to 3, wherein
the headlight unit (5) includes
an optical-axis adjusting unit (6) that adjusts an optical axis of the headlight unit (5),
the slave electric control unit (3) includes
an optical-axis control unit (3h) that controls the optical axis of the headlight unit (5) via the optical-axis adjusting unit (6), and
the optical-axis control unit (3h) and the optical-axis adjusting unit (6) are connected by a signal line (8).

## Patentansprüche

1. Fahrzeug-Scheinwerfervorrichtung, die umfasst:
eine Scheinwerfereinheit (5), die jeweils an der linken und der rechten Seite einer Fahrzeugvorderseite angeordnet ist, wobei die Scheinwerfereinheit (5) um eine im Wesentlichen vertikale Achse (V) herum gedreht werden kann;
eine Antriebseinheit (4), die die Scheinwerfereinheit (5) so antreibt, das sie um die im Wesentlichen vertikale Achse (V) gedreht wird, um eine Richtung von der Scheinwerfereinheit (5) ausgestrahlten Lichts zu ändern;
einen Fahrzeugsensor (1), der einen Zustand des Fahrzeugs erfasst und ein Erfassungssignal ausgibt;
eine elektrische Haupt-Steuereinheit (2), die einen Drehwinkel der Scheinwerfereinheit (5) auf Basis des Erfassungssignals von dem Fahrzeugsensor (1) berechnet und Drehwinkeldaten ausgibt; und
eine elektrische Neben-Steuereinheit (3), die die Antriebseinheit (4) auf Basis der Drehwinkeldaten von der elektrischen Haupt-Steuereinheit (2) steuert, um die Scheinwerfereinheit (5) anzutreiben, wobei
die elektrische Neben-Steuereinheit (3) enthält:
eine Stromzufuhr-Rücksetzschaltung (3a); und
eine zweite Signalausgabeschaltung (3f), die ein Signal über das Auftreten einer Abnormität beim Auftreten der Abnormität an die elektrische Haupt-Steuereinheit (2) ausgibt, und
wobei die elektrische Haupt-Steuereinheit (2) enthält:
eine erste Signalausgabeschaltung (2e), die ein Anweisungssignal für einen Ausgangspositions-Einstellvorgang der Scheinwerfereinheit (5) an die elektrische Neben-Steuereinheit (3) auf Basis des Signals über das Auftreten von Abnormität von der elektrischen Neben-Steuereinheit (3) ausgibt,
**dadurch gekennzeichnet, dass**
die Stromzufuhr-Rücksetzschaltung (3a) der elektronischen Neben-Steuereinheit (3) so konfiguriert ist, dass sie eine Abnormität in einem Microcontroller (3c) der elektronischen Neben-Steuereinheit (3) erfasst und beim Auftreten einer Abnormität in der elektrischen Neben-Steuereinheit (3) eine Stromzufuhr zurücksetzt.

2. Fahrzeug-Scheinwertervorrichtung nach Anspruch 1, wobei
die elektrische Haupt-Steuereinheit (2) an einer Seite des Fahrers angeordnet ist,
die elektrische Neben-Steuereinheit (3) an einer Seite der Antriebseinheit (4) und der Scheinwerfereinheit (5) angeordnet ist,
die elektrische Haupt-Steuereinheit (2) und die elektrische Neben-Steuereinheit (3) durch eine einzelne Signalleitung (7) verbunden sind, und
die elektrische Neben-Steuereinheit (3) und die Antriebseinheit (4) oder die Scheinwerfereinheit (5) durch eine Vielzahl von Signalleitungen (8) verbunden sind.

3. Fahrzeug-Scheinwerfervorrichtung nach Anspruch 1 oder 2, wobei
die elektrische Neben-Steuereinheit (3) enthält:
eine Lampen-Ansteuereinrichtung (3g), die eine Lichtmenge von einer Lichtquelle der Scheinwerfereinheit (5) reguliert, und
wobei die Lampen-Ansteuereinrichtung (3g) und die Scheinwerfereinheit (5) durch eine Signalleitung (8) verbunden sind.

4. Fahrzeug-Scheinwerfervorrichtung nach einem der Ansprüche 1 bis 3, wobei
die Scheinwerfereinheit (5) enthält:
eine Einheit (6) zum Regulieren der optischen Achse, die eine optische Achse der Scheinwerfereinheit (5) reguliert,
wobei die elektrische Neben-Steuereinheit (3) enthält:
eine Einheit (3h) zum Steuern der optischen Achse, die die optische Achse der Scheinwerfereinheit (5) über die Einheit (6) zum Regulieren der optischen Achse steuert, und
wobei die Einheit (3h) zum Steuern der optischen Achse und die Einheit (6) zum Regulieren der optischen Achse durch eine Signalleitung (8) verbunden sind.

## Revendications

1. Dispositif de phare de véhicule comprenant :
un bloc optique de phare (5) disposé sur chacun des côtés avant gauche et droit d'un véhicule, le bloc optique de phare (5) étant pivotant sur un axe sensiblement vertical (V) ;
une unité d'entraînement (4) qui entraîne le bloc optique de phare (5) pour qu'il pivote sur l'axe sensiblement vertical (V) afin de changer la direction d'une lumière rayonnant à partir du bloc optique de phare (5) ;
un détecteur de véhicule (1) qui détecte un état du véhicule et délivre un signal de détection ;
une unité de commande électrique maître (2) qui calcule un angle de pivotement du bloc optique de phare (5) à partir du signal de détection provenant du détecteur de véhicule (1) et qui délivre des données d'angle de pivotement ; et
une unité de commande électrique esclave (3) qui commande l'unité d'entraînement (4) en fonction des données d'angle de pivotement provenant de l'unité de commande électrique maître (2) pour entraîner le bloc optique de phare (5), dans lequel
l'unité de commande électrique esclave (3) comprend
un circuit de réinitialisation d'alimentation électrique (3a) ; et
un second circuit de sortie de signal (3f) qui délivre à l'unité de commande électrique maître (2) un signal d'apparition d'anomalie lorsqu'une anomalie se produit, et dans lequel
l'unité de commande électrique maître (2) comprend
un premier circuit de sortie de signal (2e) qui délivre à l'unité de commande électrique esclave (3) un signal d'instruction en vue d'une opération de réglage de position initiale du bloc optique de phare (5) en fonction du signal d'apparition d'anomalie provenant de l'unité de commande électrique esclave (3),
**caractérisé en ce que**
le circuit de réinitialisation d'alimentation électrique (3a) de l'unité de commande électrique esclave (3) est configuré pour détecter une anomalie dans un microcontrôleur (3c) de l'unité de commande électrique esclave (3) et pour réinitialiser une alimentation électrique lors de l'apparition d'une anomalie dans l'unité de commande électrique esclave (3).

2. Dispositif de phare de véhicule selon la revendication 1, dans lequel
l'unité de commande électrique maître (2) est disposée du côté conducteur,
l'unité de commande électrique esclave (3) est disposée du côté de l'unité d'entraînement (4) et du bloc optique de phare (5),
l'unité de commande électrique maître (2) et l'unité de commande électrique esclave (3) sont reliées par une seule ligne de signal (7), et
l'unité de commande électrique esclave (3) et l'unité d'entraînement (4) ou le bloc optique de phare (5) sont reliés par plusieurs lignes de signal (8).

3. Dispositif de phare de véhicule selon la revendication 1 ou 2, dans lequel
l'unité de commande électrique esclave (3) comprend
un module pilote de lampe (3g) qui ajuste une intensité de lumière provenant d'une source de lumière du bloc optique de phare (5), et
le module pilote de lampe (3g) et le bloc optique de phare (5) sont reliés par une ligne de signal (8).

4. Dispositif de phare de véhicule selon l'une quelconque des revendications 1 à 3, dans lequel le bloc optique de phare (5) comprend
une unité d'ajustement d'axe optique (6) qui ajuste un axe optique du bloc optique de phare (5),
l'unité de commande électrique esclave (3) comprend
une unité de commande d'axe optique (3h) qui commande l'axe optique du bloc optique de phare (5) par l'intermédiaire de l'unité d'ajustement d'axe optique (6), et
l'unité de commande d'axe optique (3h) et l'unité d'ajustement d'axe optique (6) sont reliées par une ligne de signal (8).
